# EUROPEAN PATENT APPLICATION

(11) **EP 1 724 999 A2**
(43) Date of publication of application: **22.11.2006**
(21) Application number: 06010119.3
(22) Date of filing: 16.05.2006
(51) Int. Cl.: H04M 1/247, H04M 1/725, H04M 1/02

(54) **Method for controlling an input mode in a wireless terminal**

(30) Priority: 18.05.2005 KR 20050041510
(71) Applicant: Samsung Electronics Co., Ltd., Yeongtong-gu Suwon-si, Gyeonggi-do (KR)
(72) Inventor: Won, Jong-Sang, Yeongtong-gu Suwon-si Gyeonggi-do (KR); Choe, Gwang-Woo, Yeongtong-gu Suwon-si Gyeonggi-do (KR)
(74) Representative: Lang, Johannes

(57) **Abstract**

Disclosed is a method for controlling an input mode in a wireless terminal (100). A second mode, for performing a communication function, is shifted, when a call is generated while characters are inputted in a first mode for performing an input function. Last inputted characters in the first mode are displayed, when the wireless terminal (100) is shifted back to the first mode after performing the communication function in the second mode.

## Description

### BACKGROUND OF THE INVENTION

### Field of the Invention

The present invention relates to a method for controlling an input mode in a wireless terminal. More particularly, the present invention relates to a method for storing and intactly displaying last characters inputted when a wireless terminal is switched into an input mode by a closing and opening operation of the wireless terminal's folder after performing a communication function.

### Description of the Related Art

Typically, a wireless terminal represents an apparatus, such as a Cellular Phone, a Personal Digital Assistant (PDA), a Personal Communication Service Phone (PCS), an International Mobile Telecommunication (IMT)-2000 terminal, and a Global System for Mobile Communication (GSM) terminal, and the like for providing a communication function that performs communication or exchange data while in motion.

The wireless terminal is an apparatus that has been increasingly reduced in size, slimmed in width and lightened in weight with consideration of portability. The wireless terminal has also been developed into a terminal capable of performing various functions, such as mobile communication, multimedia functions, and accessing Internet.

A conventional wireless terminal may be classified according to the wireless terminal external appearance. For example, a mobile communication terminal may be classified as a bar-type mobile communication terminal, a flip-type mobile communication terminal and a folder-type mobile communication terminal.

The bar-type mobile communication terminal may be a terminal that includes a single housing. The flip-type mobile communication terminal may be a terminal that includes a housing that flips and can be rotated by a hinge device. The folder-type mobile communication terminal may be a terminal that includes a folder housing that may be rotated by a hinge device.

Further, a wireless terminal may also be classified either as a rotation-type mobile communication terminal or sliding-type mobile communication terminal according to a design of an opening and closing scheme of the terminal. In the rotation-type mobile communication terminal, two housings are connected to be opened or closed while keeping the two housings facing each other. In the sliding-type mobile communication terminal, one of two housings slides in a longitudinal direction when the terminal is opened or closed.

It is apparent for those skilled in the art to understand the variously classified mobile communication terminals.

In the conventional wireless terminal, a display screen, such as a Liquid Crystal Display (LCD), is constructed in a rectangular shape. When the rectangular display screen is employed in a folder-type wireless terminal, a normal-view display screen is provided. Therefore, the ability to provide a screen of wide width is limited. That is, if a user wishes to watch TV or a Video on Demand (VoD) by using the folder-type wireless terminal, the display screen of wide width can not be provided because the display screen has a normal-view display. Accordingly, a bi-axial hinge type wireless terminal has been developed, in which the display section can be aligned longitudinally or transversely.

However, in the bi-axial hinge type wireless terminal as described above, a user must open the wireless terminal's folder, enter into a detailed menu in a waiting mode, and use various key functions of the terminal to accomplish a desired function.

That is, the bi-axial hinge type wireless terminal is constructed in such a manner that only a LCD display screen can be aligned longitudinally or transversely through various key functions of the terminal. Therefore, in order to achieve certain terminal functions, a user must enter into a detailed menu through key inputs in the waiting mode.

In order to solve the problems as described above, a wireless terminal has been provided, in which an operation mode may be switched in accordance with an open operation of the wireless terminal's folder. The wireless terminal is switched into either a first mode for performing an input function or a second mode for performing a communication mode in accordance with the open operation of the wireless terminal's folder, thereby performing corresponding terminal functions.

However, when a call is generated during an input of characters in the second mode of the wireless terminal as described above, the wireless terminal must be switched into the first mode in order to perform the communication function. If the wireless terminal performs the communication function by switching from the first mode to the second mode, and then the wireless terminal is switched back to the first mode, the characters inputted are lost. Thus, the wireless terminal returns to an initial state in an input mode.

Accordingly, there is a need for an improved wireless terminal that allows a user to perform terminal functions, such as an input function in a first mode and a communication function in a second mode, without losing characters inputted in the first mode during the retrieval of a generated call in the second mode.

### SUMMARY OF THE INVENTION

An aspect of embodiments of the present invention is to address at least the above problems and/or disadvantages and to provide at least the advantages described below. Accordingly, an aspect of embodiments of the present invention is to provide a method for storing and intactly displaying the last characters inputted when a wireless terminal is switched to an input mode through a closing and opening operation of the wireless terminal's folder, after performing a communication function.

In order to accomplish the aforementioned object, according to an aspect of an exemplary embodiment of the present invention, a method for controlling an input mode in a wireless terminal is provided where a second mode for performing a communication function is shifted, when a call is generated while characters are being input in a first mode for performing an input function, and last input characters are displayed in the first mode, when the wireless terminal is shifted to the first mode after performing the communication function in the second mode.

In order to accomplish the aforementioned object, according to an aspect of an exemplary embodiment of the present invention, a method for controlling an input mode is provided in a wireless terminal, where a state of a folder of the wireless terminal is determined, when a call is generated. A current mode of the wireless terminal is determined, when the folder of the wireless terminal has been opened. A generation of the call is reported during input of characters, when the current mode is a first mode for performing input. Communication is performed when the first mode is shifted to a second mode while reporting the generation of the call. Last input characters are displayed in the first mode, when the wireless terminal is shifted into the first mode after performing the communication in the second mode.

Other objects, advantages, and salient features of the invention will become apparent to those skilled in the art from the following detailed description, which taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following description taken in conjunction with the accompanying drawings, in which:
FIG. 1 is a block diagram illustrating construction of a wireless terminal according to an exemplary embodiment of the present invention;
FIGs. 2A to 2C are perspective views illustrating modes of a wireless terminal based on operations of a detector according to an exemplary embodiment of the present invention; and
FIGs. 3A and 3B are flow diagrams illustrating a process in which a wireless terminal is switched into a first mode without loss of characters inputted, even after performing the communication function in a second mode, according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

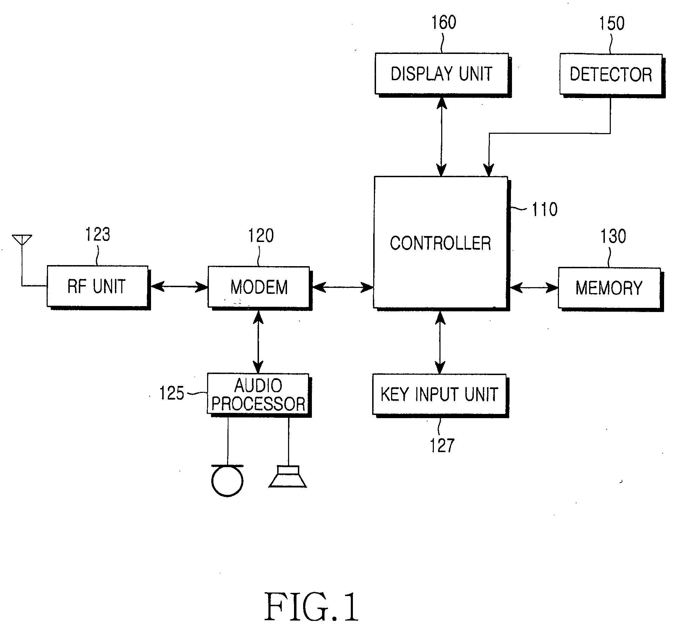

FIG. 1 is a block diagram illustrating the construction of a wireless terminal according to an exemplary embodiment of the present invention.

Referring to FIG. 1, a Radio Frequency (RF) unit 123 performs a wireless communication function of a wireless terminal. The RF unit 123 includes an RF transmitter for up-converting and amplifying the frequency of transmitted signals, an RF receiver for low-noise amplifying received signals and down-converting the frequency of the received signals, etc. A modem 120 includes a transmitter for coding and modulating the transmitted signals, a receiver for demodulating and decoding the received signals, etc. An audio processor 125, which may include a codec that includes a data codec for processing packet data, and an audio codec for processing audio signals such as voice. The audio processor 125 converts digital audio signals received through the modem 120 into analog signals through the audio codec for reproduction, or converts analog audio signals generated from a microphone into digital audio signals through the audio codec and transmits the digital audio signals to the modem 120. The codec may be separately provided or included in a controller 110.

A memory 130 may include a program memory and a data memory. The program memory may store programs for controlling general operations of the wireless terminal. The program memory may also store programs for controlling a display of the last inputted characters when the wireless terminal is switched into an input mode after performing a communication function according to an exemplary embodiment of the present invention. Further, the data memory temporarily stores data generated during the execution of the programs.

The controller 110 performs a function of controlling the general operations of the wireless terminal, which may also include the modem 120 and the codec. The controller 110 receives a first to third detection signal from a detector 150, and determines the wireless terminal mode and folder state according to an exemplary embodiment of the present invention.

A first mode of the wireless terminal implements the input function, and a second mode of the wireless terminal implements the communication function. The first mode may allow a user to input a Short Message Service (SMS), Multimedia Messaging Service (MMS), phone book, calendar, schedule, and the like. If a call is generated in the first mode while a character input operation is performed, the controller 110 reports the generation of the call. Then, if the wireless terminal is switched to a second mode, by performing a closing and opening operation of the wireless terminal's folder, the controller 110 controls the communication function to be performed. Further, if the wireless terminal is switched back into the first mode through the closing and opening operation of the wireless terminal's folder, after performing the communication function in the second mode, the controller 110 intactly displays the last inputted characters. Thus, the wireless terminal is controlled to allow the corresponding character input operation to be continued.

A display unit 160 displays user data output from the controller 110. The display unit 160 may use a Liquid Crystal Display (LCD). Additionally, the display unit 160 may include an LCD controller, a memory capable of storing image data, and a LCD display device. If the LCD has a touch screen function, the LCD may function as an input unit. The display unit 160 can display both data for performing the input function in the first mode, and waiting screen data for performing the communication function in the second mode according to an exemplary embodiment of the present invention.

A key input unit 127 includes keys for inputting numerals and character information and function keys for setting various functions.

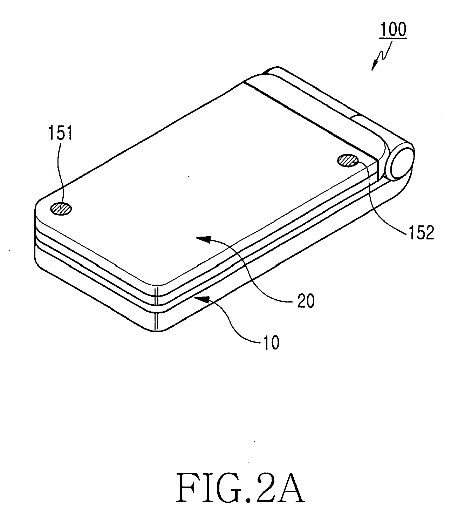

The detector 150 outputs detection signals in the first mode for performing the communication function, and detection signals in the second mode for performing the input function in the wireless terminal. In addition, the detector 150 outputs detection signals obtained from detecting the opening and closing operation of the wireless terminal's folder. Hereinafter, the construction of the detector 150 will be described with reference to FIGs. 2A to 2C.

FIGs. 2A to 2C are perspective views of the detector 150 according to an exemplary embodiment of the present invention, which are perspective views illustrating the first and second modes of the wireless terminal based on operations of the detector 150.

Referring to FIGs. 2A to 2C, the detector 150 includes two sensors and two magnets. Between the two sensors, the first sensor 151 is mounted in position at an upper end of an inner side of the wireless terminal folder 20, and the second sensor 152 is mounted in position at a lower end of the inner side of the folder 20. Between the two magnets, the first magnet 153 is mounted in position at an upper end of an inner side of the body 10 of the wireless terminal. When the wireless terminal's folder 20 is closed, the first magnet 153 position is opposite to the second sensor 152 position. The second magnet 154 is mounted in position at a lower end of the inner side of the wireless terminal body 10. When the wireless terminal's folder 20' is closed, the second magnet 154 position is opposite to the first sensor 151 position.

In FIG. 2A, the folder 20 of the wireless terminal has been closed. If the first sensor 151 and the second sensor 152 make contact with the second magnet 154 and the first magnet 153, respectively, the detector 150 generates a third detection signal and outputs the third detection signal to the controller 110 for reporting the closure of the folder 20 of the wireless terminal.

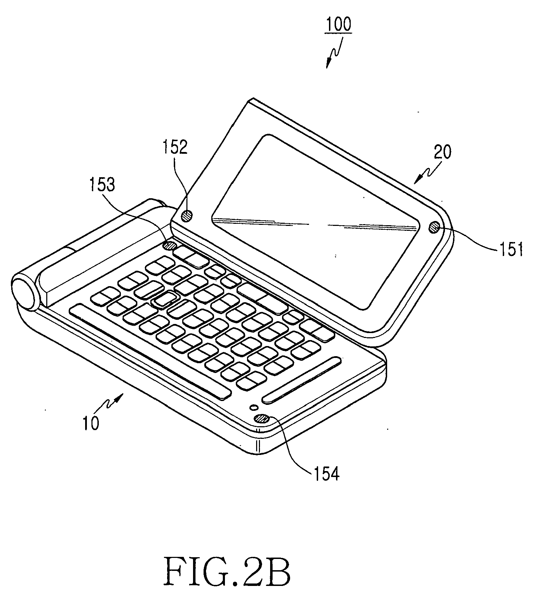

In FIG. 2B, the wireless terminal 100 is in the first mode for performing the input function. If the second sensor 152 makes contact with the first magnet 153, the detector 150 detects that the wireless terminal 100 is in the first mode, generates a first detection signal and outputs the first detection signal to the controller 110 for reporting that the wireless terminal is in the first mode.

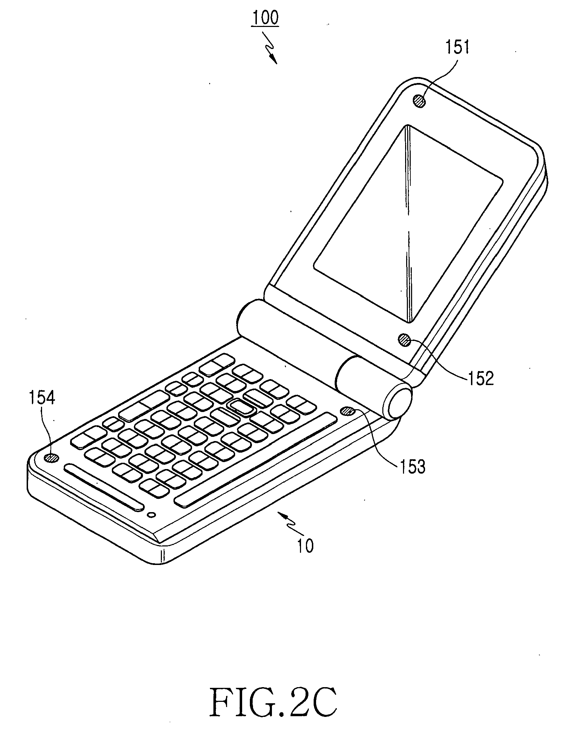

In FIG. 2C, the wireless terminal is in the second mode for performing the communication function. If the first sensor 151 and the second sensor 152 do not make contact with the second magnet 154 and the first magnet 153, respectively, the detector 150 detects that the wireless terminal is in the second mode, generates a second detection signal and outputs the second detection signal to the controller 110 for reporting that the wireless terminal is in the second mode.

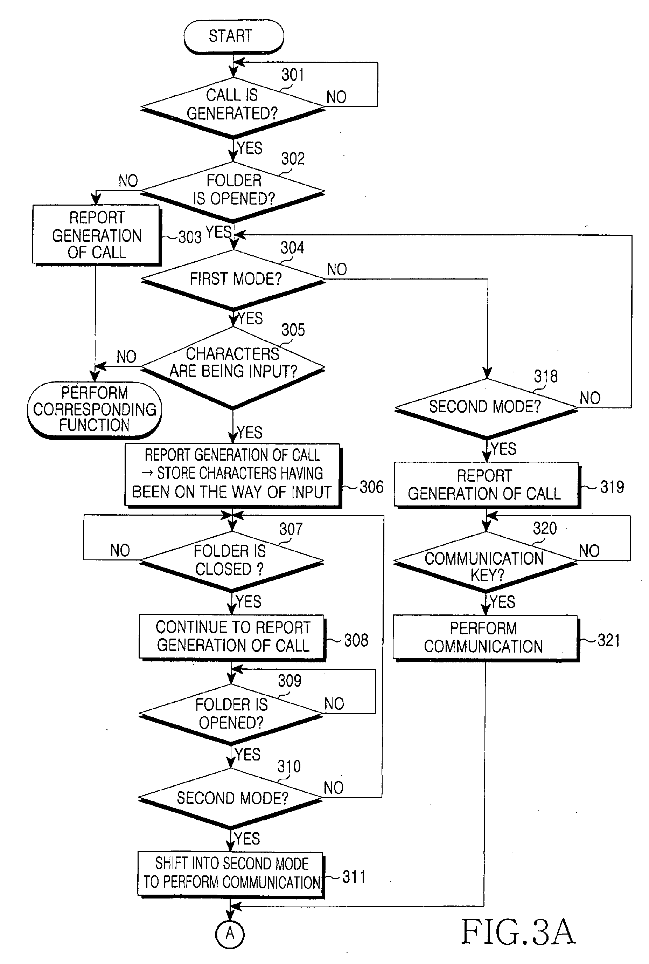

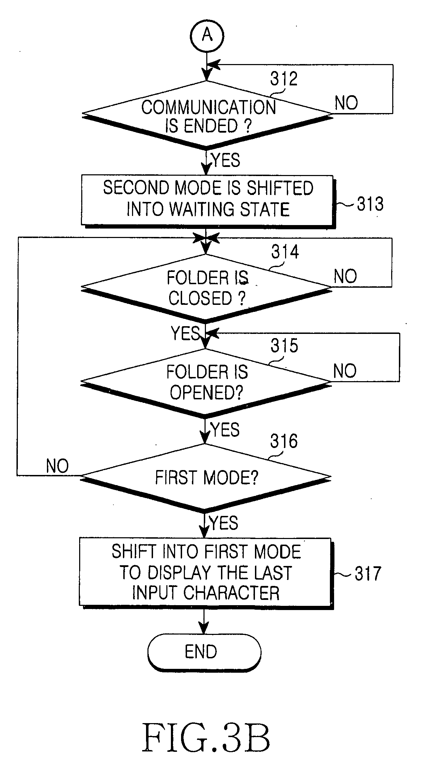

Hereinafter, an operation for intactly displaying the last characters when the wireless terminal is switched to the first mode for performing an input function, by the closing and opening operation of the wireless terminal's folder, after performing the communication in the second mode will be described with reference to FIGs. 3A and 3B.

FIGs. 3A and 3B are flow diagrams illustrating a process in which the wireless terminal is switched to the first mode without losing inputted characters after performing the communication function in the second mode, according to an exemplary embodiment of the present invention.

Hereinafter, an exemplary embodiment of the present invention will be described in detail with reference to FIG. 1, and FIGs. 2A to 2C.

Referring to FIGs. 3A to 3C, if a call is generated in the wireless terminal 100, the controller 110 detects the generation of the call and determines the state of the folder 20 of the wireless terminal in step 301.

If the detector 150 detects that the first sensor 151 and the second sensor 152 is in contact with the second magnet 154 and the first magnet 153, respectively, as illustrated in FIG. 2A, and outputs the third detection signal to the controller 110, the controller 110 detects that the folder of the wireless terminal has been opened in step 302, and informs a user of the generation of the call in step 303.

However, if the detector 150 detects that the second sensor 152 is in contact with the first magnet 153, and outputs the first detection signal to the controller 110, the controller 110 detects the first detection signal in steps 302 and 304. The controller 110 then controls the wireless terminal to be shifted to the first mode for performing the input function.

If the user is in a process of inputting characters in the first mode, the controller 110 detects the input of the characters in step 305, and informs the user of the generation of the call through a ringing sound, vibration or messages in the first mode. The controller 110 then stores the characters inputted in step 306. While the call is generated, if the user closes the folder 20 of the wireless terminal as illustrated in FIG. 2A, the controller 110 detects the closure of the folder in step 307. The controller 110 then continues to report the generation of the call in a state in which the folder of the wireless terminal is closed in step 308.

In the wireless terminal's folder closure state, if the detector 150 detects that the first sensor 151 and the second sensor 152 is not in contact with the second magnet 154 and the first magnet 153, respectively, as illustrated in FIG. 2C, and outputs the second detection signal to the controller 110, the controller 110 detects the second detection signal in steps 309 and 310. The controller then controls the wireless terminal to shift to the second mode in which the user can perform the communication function, in step 311. If the communication function ends in the second mode, the controller 110 detects the ending of the communication in step 312, and switches the second mode into a waiting state in step 313.

If the third detection signal is outputted from the detector 150 in the waiting state, the controller 110 detects that the folder of the wireless terminal has been closed as illustrated in FIG. 2A in step 314. Further, if the second detection signal is outputted from the detector 150, the controller 110 detects the second detection signal in steps 315 and 316, and controls the wireless terminal to shift to the first mode as illustrated in FIG. 2B in step 317. Since the display unit 160 displays the characters stored in step 306, that is, the last input characters in the first mode, the user can continue to input other characters.

Further, if a call is generated in the wireless terminal 100 and the detector 150 detects that the first sensor 151 and the second sensor 152 is not in contact with the second magnet 154 and the first magnet 153, respectively, as illustrated in FIG. 2C, and outputs the second detection signal to the controller 110, the controller 110 detects that the wireless terminal is in the second mode in steps 302 and 318. The controller 110 also informs the user of the generation of the call in step 319. However, if the user recognizes the generation of the call and inputs a communication key, the controller 110 detects the input of the communication key in step 320 and performs the communication function in step 321. If the communication ends, the controller 110 detects the ending of the communication function in step 312, and switches the second mode into the waiting state in step 313. Further, if the wireless terminal is shifted into the first mode from steps 314 to 316 while in the waiting state, the controller 110 checks an existence or absence of characters that have been inputted in the previous first mode and stored. If the characters exist, the controller 110 controls the display unit 160 to display the last inputted characters in the first mode, in step 317.

According to exemplary embodiments of the present invention as described above, when a wireless terminal is switched to an input mode after performing a communication function, last inputted characters are stored and displayed. Therefore, it is not necessary for a user to input characters again. Accordingly, communication is conveniently performed at any time during the input of characters in the input mode. Further, according to exemplary embodiments of the present invention, a communication mode or an input mode can be freely switched, so that various operations can be performed through quick processing instead of sequential processing.

While certain exemplary embodiments of the present invention have been described, it will be understood by those skilled in the art that various changes in form and details may be made therein without departing from the scope and spirit of the invention as defined by the appended claims.

## Claims

1. A method for controlling an input mode in a wireless terminal, the method comprising the steps of:
shifting from a first mode into a second mode for performing a communication function, when a call is generated while characters are being input in the first mode ; and
displaying last characters inputted in the first mode, when the wireless terminal is shifted back to the first mode after performing the communication function in the second mode.

2. The method as claimed in claim 1, wherein the shifting to the second mode from the first mode comprises opening after closing a folder of the wireless terminal.

3. The method as claimed in claim 2, further comprising, reporting the generation of the call and maintaining the reporting, when the folder of the wireless terminal is closed in order to the shift from the first mode to the second mode.

4. The method as claimed in claim 1, wherein the shifting to the first mode from the second mode comprises opening after closing a folder of the wireless terminal.

5. A method for controlling an input mode in a wireless terminal, the method comprising the steps of:
determining a state of a folder of the wireless terminal, when a call is generated;
determining a current mode of the wireless terminal, when the folder of the wireless terminal has been opened;
reporting a generating of the call during input of characters, when the current mode is a first mode ;
performing a communication function when the first mode is shifted to a second mode, while reporting the generation of the call; and
displaying last inputted characters in the first mode, when the wireless terminal is shifted into the first mode after performing the communication in the second mode.

6. The method as claimed in claim 5, further comprising a step of storing the inputted characters, when the call is generated during the input of the characters in the first mode.

7. The method as claimed in claim 5, further comprising the steps of:
reporting the generation of the call, when the current mode is the second mode;
performing the communication function in the second mode, when communication is selected while reporting the generation of the call; and
determining an existence or absence of the last inputted characters in the first mode, and displaying the characters when the characters exist, when the wireless terminal is shifted to the first mode from the second mode.

8. The method as claimed in claim 5, wherein the shifting of the wireless terminal to the second mode from the first mode comprises opening after closing a folder of the wireless terminal.

9. The method as claimed in claim 8, wherein the reporting of the generation of the call is maintained, when the folder of the wireless terminal is closed during the shift from the first mode to the second mode.

10. The method as claimed in claim 5, wherein the shifting to the first mode from the second mode comprises opening after closing a folder of the wireless terminal.

11. The method as claimed in claim 1, wherein the first mode comprises a mode for performing at least one of input of a message, e-mail, phone book, calendar or schedule.

12. The method as claimed in claim 7, wherein the shifting to the first mode from the second mode comprises opening after closing a folder of the wireless terminal.

13. The method as claimed in claim 5, wherein the first mode comprises a mode for performing at least one of input of a message, e-mail, phone book, calendar or schedule.
